# EUROPÄISCHE PATENTANMELDUNG

(11) **EP 1 457 502 A1**
(43) Veröffentlichungstag der Anmeldung: **15.09.2004**
(21) Anmeldenummer: 04004501.5
(22) Anmeldetag: 27.02.2004
(51) Int. Cl.: C08F 4/80, C08F 110/02

(54) **Verfahren zur Herstellung eines Azo-Katalysators für die Polymerisation von Olefinen**

(30) Priorität: 10.03.2003 DE 10310289
(71) Anmelder: BAYER AG, 51368 Leverkusen (DE)
(72) Erfinder: Weiss, Thomas, Dr., 68259 Mannheim-Freudenheim (DE)

(57) **Zusammenfassung**

Die vorliegende Erfindung betrifft ein Verfahren zur Herstellung eines Katalysators durch Umsetzen von Metallverbindungen mit Azoliganden, den Katalysator, die Verwendung dieser Katalysatoren als Polymerisationskatalysatoren, ein Verfahren zur Olefin-(Co)-Polymerisation mit Hilfe dieser Katalysatoren, Reaktionsprodukte dieser Katalysatoren mit Cokatalysatoren, das Olefin-(Co)-Polymere, die Verwendung dieses Olefin-(Co)-Polymere zur Herstellung von Formteilen sowie Formteile, die aus den Olefin-(Co)-Polymeren hergestellt werden.

## Beschreibung

Die vorliegende Erfindung betrifft ein Verfahren zur Herstellung eines Katalysators durch Umsetzen von Metallverbindungen mit Azoliganden, den Katalysator, die Verwendung dieser Katalysatoren als Polymerisationskatalysatoren, ein Verfahren zur Olefm-(Co)-Polymerisation mit Hilfe dieser Katalysatoren, Reaktionsprodukte dieser Katalysatoren mit Cokatalysatoren, das Olefm-(Co)-Polymere, die Verwendung dieses Olefin-(Co)-Polymere zur Herstellung von Formteilen sowie Formteile, die aus den Olefin-(Co)-Polymeren hergestellt werden.

Es besteht ein großer Bedarf an Katalysatorverbindungen, die zur Polymerisation von Olefmen in Gegenwart von polaren Zusätzen geeignet sind.

Die Polyolefinindustrie arbeitet mit Verfahren, die mit Hilfe von verschiedenen Katalysatoren und Radikalinitiatorsystemen Ethen sowie andere nichtpolare 1-Olefine polymerisiert. Solche Polymerisationen können durch die Nutzung organometallischer Ziegler-Natta-Koordinationskatalysatoren, Chromkatalysatoren und jüngst mit metallocenartigen Verbindungen früher Übergangsmetalle, wie auch Radikalinitiatoren durchgeführt werden. Weiterhin zeigt sich, dass diese Katalysatoren sehr empfindlich auf eine Reihe von Substanzen reagieren, die die katalytische Aktivität beeinträchtigen oder gänzlich verhindern. Beispielsweise ist bekannt, dass Spuren von Sauerstoff, Kohlenmonoxid, Wasser, oder sauerstoffhaltigen organischen Verbindungen, die als Donoren wirken eine Deaktivierung dieser Katalysatoren verursachen können. Wenn solche Substanzen vorhanden sind, limitiert sich der Einsatz von Katalysatoren normalerweise auf Radikalinitiatorsysteme.

Um diesen Umstand zu verbessern und auch polare Monomere zu copolymerisieren, wurden Katalysatoren auf Basis später Übergangsmetalle entwickelt. Übersichtsartikel finden sich in Mecking, S. *Angew. Chem.* **2001**, *113,* 550; Ittel,S., Johnson, L.K. und Brookhart M. *Chem Rev.* **2000**, *100,* 1169 und Boffa, L.S.; Novak, B.M in *Chem. Rev.* **2000**, *100,* 1479.

Typischerweise werden die eingesetzten Komplextypen eingeteilt in solche mit anionischen Ligandengerüsten bzw. in solche mit neutralem Ligandengerüsten. Die Gruppe von Komplexen mit anionischem Ligandengerüst zeigen aufgrund der ungeladenen, (neutralen) aktiven Polymerisationsspezies besonders robuste Eigenschaften im Hinblick auf obengenannte Katalysatorgifte. Ursächlich ist die auftretende geringere Lewisacidität der katalytischen Spezies. Daher stehen gerade solche Katalysatortypen im Blickfeld des aktuellen Forschungsinteresses. So beschreiben Ostoja Starzewski und K.A.; Witte in J. *Angew. Chem.* **1987**, *99*, 76 solche Katalysatoren mit einem [P,O]-Ligandtypen. Von ähnliche Katalysatoren berichten auch Klabunde, U.; Ittel, S.D in *J Mol. Catal.* **1987**, *41*, 123. Auch in US-A 5,175,326 werden vergleichbare Katalysatoren [P,O]-Komplexe offenbart.

Konzeptionell ähnlich zu [P,O]-Komplexe wurde eine neue Katalysatorklasse A entwickelt, die anstelle des Phosphordonors einen iminischen Stickstoffdonor aufweist.

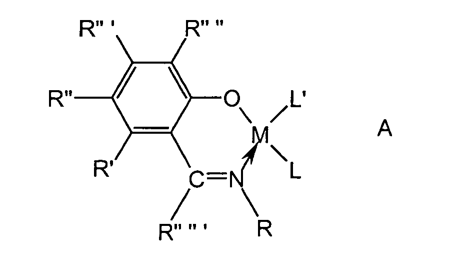

Gemeinsames Merkmal sind große sterische Reste R und R" ", die die apicalen Positionen um das Metallzentrum möglichst abschirmen.

Die entsprechenden Verfahren zur Herstellung solcher Katalysatoren sind in WO 98/30609, WO 98/42664, WO 98/42665, DE-A 199 61 340, WO 00/56785, WO 01/92347 und WO 02/08236 näher beschrieben.

Überraschend wurde nun gefunden, dass sich auch spezielle Azofarbstoffe zur Komplexierung in die Reihe von anionischen Ligandensystemen einfügen lassen. Azofarbstoffe stellen eine bereits gut untersuchte Verbindungsklasse da, die zudem in großtechnischem Maßstab synthetisierbar sind.

In *Macromolecules,* **2002**, *35,* 6071 werden von Schröder, D.L.; Keim, W.; Zuideveld, M.A.; Mecking, S. derartige Liganden zur Herstellung von Single-Site-Katalysatoren für die Polymerisation von Olefinen offenbart. Eine Aktivierung mit unterschiedlichsten Lewissäuren in Gegenwart von polaren Zusätzen sowie sterisch anspruchsvolle otho-substituierte Verbindungen, die eine besonderen Einfluss auf die Aktivität und die Molmasse haben, werden jedoch nicht offenbart.

In EP-A 1 170 308 werden Liganden beschrieben, die ebenfalls eine Azofunktion aufzeigen aber im Gegensatz zu den beanspruchten Komplexen keine Sauerstoff-Metall-Bindung sondern eine amidartige Stickstoff Metall-Bindung zeigen. Auch werden keine Übergangsmetallverbindungen mit späten Übergangselementen offenbart. Es werden keine sterisch anspruchvollen Substituenten in ortho-Position zum amidartigen Stickstoff in derartigen Komplexen beschrieben.

DE-A 123747 offenbart ein monometallischen, chelatisierenden Azo-Liganden, der neben der Azo-Donorfunktion eine Metall-Kohlenstoff(Phenyl)-Bindung, also keine Sauerstoff-Metall-Bindung sondern eine carbanionische Phenyl-Metall-Bindung aufweist. Da nachgewiesenermaßen Metall-Phenylbindungen des Nickels polymerisationsaktiv sind, würde der in DE-A 123747 postulierte Komplex während der Polymerisation nicht chelatartig das Metallzentrum koordiniert. Nachteilig bei diesem Verfahren ist damit die Veränderung der Geometrie des Metallkomplex während der Polymerisation. Somit sind keine guten Ergebnisse bezüglich der Einheitlichkeit der Polymere zu erwarten.

Die Aufgabe der vorliegenden Erfindung ist es daher Katalysatoren bereit zustellen, die auch in Gegenwart von polaren Zusätzen eine Olefin-(Co)-Polymerisation ermöglichen.

Diese Aufgabe wird gelöst durch ein Verfahren zur Herstellung von einem Katalysator umfassend die Schritte 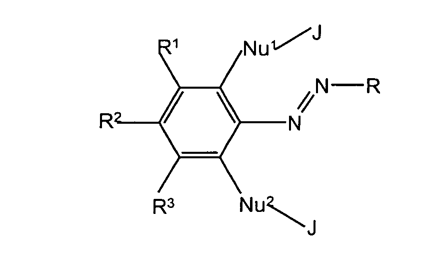
a) Lösen von Verbindungen der allgemeinen Formel (I) 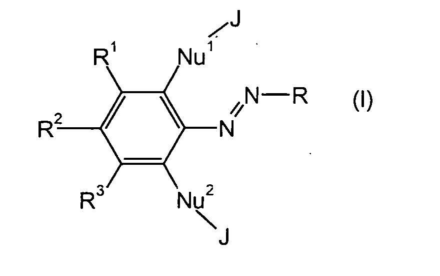 in einem aprotischem unpolaren Lösungsmittel, wobei
   - Nu¹, Nu²: unabhängig voneinander für -O, -S, -Se, -PR^{a}, -NR^{a}, -COO-Gruppen
   mit
   - R^{a}: Wasserstoff, substituierte oder unsubstituierte Alkyl- oder Arylreste steht und
   - J: ein Element ausgewählt aus der 1. oder 2. Hauptgruppe des Periodensystems
   - R, R¹, R² und R³: gleich oder verschiedene Reste sind, die unabhängig voneinander ausgewählt sind aus der Gruppe bestehend aus H, Halogene, substituierte oder unsubstituierte C₁-C₈ Alkyl-, C₂-C₈ Alkenyl-, C₃-C₁₂ Cycloalkyl-, C₇-C₁₃ Aralkyl- und C₆-C₁₄ Arylgruppen und R¹ mit R² oder R³ und R² mit R³ einen Ring ausbilden kann,
b) Lösen einer Metallverbindung der allgemeinen Formeln (II)

   M(L¹)_{W}(L²)_{Y}(L³)_{Z} (II)

   in einem aprotischem unpolaren Lösungsmittel,
   wobei
   - M: für ein Element der 4.-12. Nebengruppe des Periodensystems steht,
   - L¹: ein Neutralligand ist,
   - L², L³: unabhängig voneinander ein anionischer Ligand sind, wobei L¹ und/oder L² mit L³ miteinander durch eine oder mehrere kovalente Bindungen verknüpft sein können und
   - W: eine ganze Zahl von 0 bis 3 sein kann,
   - Y: eine ganze Zahl von 0 bis 3 sein kann und
   - Z: eine ganze Zahl von 0 bis 3 sein kann, wobei für den Fall das einer der drei Variablen W, Y oder Z =0 ist, die Summe aus den beiden restlichen Variablen gleich 2, 3 oder 4 ist.
c) Mischen der Lösungen a) und b).

Vorteilhaft ist das erfindungsgemäße Verfahren wenn Verbindungen der Formel (I),
wobei
- Nu¹ und Nu²: -O sind,
- J: für ein Element der 1. Hauptgruppe des Periodensystems steht
- R: ausgewählt ist aus der Gruppe bestehend aus substituierten oder unsubstituierten C₆-C₁₄ Aralkylgruppen
- R¹, R², und R³: gleich oder verschiedene Reste sind und unabhängig voneinander ausgewählt sind aus der Gruppe bestehend aus H, substituierten oder unsubstituierten C₁-C₈ Alkylgruppen, C₂-C₈ Alkenylgruppen, C₃-C₁₂ Cycloalkylgruppen, C₇-C₁₃ Aralkylgruppen, C₆-C₁₄ Arylgruppen,
mit Verbindungen der Formel (II),
wobei
- M: ausgewählt ist aus der Gruppe bestehend aus Ti, Zr, Hf, Cr, V, Fe, Co, Ni, Ru, Rh, Pd, Os, Ir, Pt, Cu, Ag, Au, Zn, Cd und Hg
- L¹: ein organischer oder anorganischer Neutralligand ist, ausgewählt aus der Gruppe bestehend aus Phospanen, der allgemeinen Formel (R¹³)ₓPH_{3-x,} Amine mit der allgemeinen Formel (R¹³)ₓNH_{3-x,} Tetraalkylethylendiamin, Tetraarylethylendiamine, Ether mit der allgemeinen Formel (R¹³)₂O, Alkohole mit der allgemeinen Formel (R¹³)OH, Pyridinderivate mit der allgemeinen Formel C₅H₅₋ₓ(R¹³)ₓN, CO, C₁-C₁₂ Alkylnitril, C₆-C₁₄ Arylnitril und einfach oder mehrfach ethylenisch ungesättigte Doppelbindungssysteme, wobei
R¹³ ausgewählt ist aus der Gruppe bestehend aus H, C₁-C₈ Alkylgruppen, Benzylresten und C₆-C₁₄ Arylgruppen und
x für eine ganze Zahl von 0 bis 3 steht, und
- L², L³: ein anionischer Ligand ist, ausgewählt aus der Gruppe bestehend aus Halogenidionen, Amidanionen der Formel R¹⁴R¹⁵N, C₁-C₆-Alkylanionen, Allylanionen, Methallylanionen, Benzylanionen und Arylanionen,
wobei
R¹⁴ und R¹⁵ unabhängig voneinander ausgewählt sind aus der Gruppe bestehend aus H, C₁-C₈ Alkylgruppen, Benzylresten und C₆-C₁₄ Arylgruppen und R¹⁴ mit R¹⁵ auch kovalent verknüpft sein kann und
- W: ein ganze zahl von 0 bis 3 ist
- Y: eine ganze Zahl von 0 bis 3 ist und
- Z: eine ganze Zahl von 0 bis 3 sein kann, wobei für den Fall das einer der drei Variablen W, Y oder Z =0 ist, die Summe aus den beiden restlichen Variablen gleich 2, 3 oder 4 ist,
umgesetzt werden.

Vorteilhaft ist das erfindungsgemäße Verfahren, wenn Verbindungen der Formel (I),
wobei
- Nu¹ und Nu²: O sind,
- J: Lithium oder Wasserstoff ist
- R: Mesityl, 2,4,6-Trimethylphenyl oder 2,6 Diisopropylphenyl ist,
- R¹, R², und R³: gleich oder verschiedene Reste sind und unabhängig von einander ausgewählt sind aus der Gruppe bestehend aus H, C₁-C₈ Alkylgruppen und C₆-C₁₄ Arylgruppen,
mit Verbindungen der Formel (II),
wobei
- M: ausgewählt ist aus der Gruppe bestehend aus Ti, Zr, Cr, V, Fe, Co, Ni, Pd, Cu und Zn
- L¹: ein Neutralligand ist, ausgewählt aus der Gruppe bestehend aus Triphenylphosphin, Triethylphosphin, Trimethylphosphin, Trimethylphosphan, Dibenzophosphol, Triphenylphosphit, Triethylphosphit, Trimethylphosphit, Triphenylphosphit, Tetramethylethylendiamin, Trimethylamin, Triethylamin, Dimethylanilin, Diethylanilin, Benzyldimethylamin, Benzyldieethylamin, Diisopropylamin, Diethylamin, Dimethylamin, Diphenylamin, Phenylendiamine, Diethylether, Tetrahydrofuran, Wasser, Methanol, Ethanol, Pyridin, 2-Picolin, 3-Picolin, 4-Picolin, 2,3-Lutidin, 2,4-Lutidin, 2,5-Lutidin, 2,6-Lutidin, 3,5 Lutidin, CO, Acrylnitril, Acetonitril, Propionitril, Butyronitril, Benzonitril, Ethenyl, Propenyl, cis-2-Butenyl, trans-2-Butenyl, Cyclohexenyl und Norbomenyl,
- L², L³: ein anionischer Ligand ist, ausgewählt aus der Gruppe bestehend aus Chlorid, Bromid, Dimethylamid, Diethylamid, Amid, 2-Carbonsäureestermetallyl, Allyl, Methyl, Ethyl, n-Propyl, i-Propyl, n-Butyl, tert.-Butyl, Hexyl und Phenyl,
- W: eine ganze Zahl von 0 bis 3
- Y: eine ganze Zahl von 0 bis 3 und
- Z: eine ganze Zahl von 1 bis 3 sein kann, wobei für den Fall das einer der drei Variablen W, Y oder Z =0 ist, die Summe aus den beiden restlichen Variablen gleich 2, 3 oder 4 ist,
umgesetzt werden.

Vorteilhaft ist das erfindungsgemäße Verfahren, wenn Verbindungen der Formel (I),
wobei
- Nu¹ und Nu²: -O sind,
- J: Lithium, Wassertsoff ist
- R: Mesityl oder 2,6-Diisopropylphenyl
- R¹: tert.-Butyl oder Phenyl
- R²: H
- R³: tert.-Butyl
mit Verbindungen der Formel (II), wobei
- M: Ni oder Pd
- L¹: Tetramethylendiamin, Triphenylphosphan, Trimethylphosphan oder 1,5-Cyclooctadien
- L²: Chlorid, Phenyl oder Methyl
- L³: Chlorid, Phenyl oder Methyl
- W: eine ganze Zahl von 0 bis 3
- Y: Y eine ganze Zahl von 0 bis 3 und
- Z: Z eine ganze Zahl von 0 bis 3 ist, wobei für den Fall das einer der drei Variablen W, Y oder Z =0 ist, die Summe aus den beiden restlichen Variablen gleich 2, 3 oder 4 ist,
umgesetzt werden.

Ein weiterer Gegenstand der Erfindung sind Katalysatoren erhältlich durch das erfindungsgemäße Verfahren.

Ein weiterer Gegenstand der Erfindung ist die Verwendung des Katalysators erhältlich nach dem erfindungsgemäßen Verfahren als Polymerisationskatalysator.

Ein weiterer Gegenstand der Erfindung ist ein Verfahren zur Herstellung von Olefin-(Co)-Polymeren, wobei ein Katalysator, der nach dem erfindungsgemäßen Verfahren erhalten wird, in Gegenwart von olefinischen Monomeren ausgewählt aus der Gruppe bestehend aus 1-Olefinen, Cycloolefinen, funktionalisierten 1-Olefinen und Mischungen derselben umgesetzt wird.

Vorteilhaft wird zu dem Verfahren zur Herstellung von Olefin-(Co)-Polymeren Bor- oder Aluminiumverbindungen als Cokatalysatoren zum Reaktionsgemisch hinzugegeben.

Vorteilhaft wird in dem Verfahren zur Herstellung von Olefin-(Co)-Polymeren ein Molverhältnis von Cokatalysator zu Metall M in der Verbindung der Formel (II) im Bereich von 1:10 bis 1: 10000 verwendet.

Vorteilhaft wird in dem Verfahren zur Herstellung von Olefin-(Co)-Polymeren Alumiumoxane als Cokatalysatoren eingesetzt.

Vorteilhaft wird das Verfahren zur Herstellung von Olefin-(Co)-Polymeren in polaren Lösungsmitteln oder Lösungsmittelgemischen durchgeführt wird.

Ein weiterer Gegenstand der Erfindung sind Reaktionsprodukte, die durch Umsetzung des Katalysators aus dem erfindungsgemäßen Verfahren mit den Cokatalysatoren erhalten werden.

Ein weiterer Gegenstand der Erfindung sind Olefm-(Co)-Polymere, die durch das Verfahren zur Herstellung von Olefin-(Co)-Polymere erhältlich sind.

Ein weiterer Gegenstand der Erfmdung ist die Verwendung der Olefm-(Co)-Polymere zur Herstellung von Formteilen aller Art.

Ein weiterer Gegenstand der Erfindung sind die Formteile, die aus dem Olefin-(Co)-Polymers erhältlich sind.

Für das erfindungsgemäße Verfahren werden Verbindungen der Formel (I) 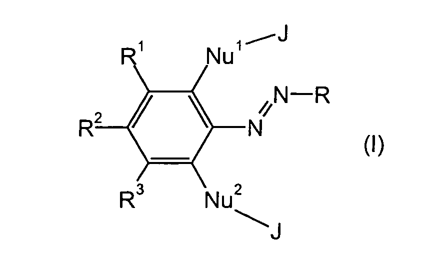 eingesetzt,
wobei
Nu¹, Nu² unabhängig ausgewählt aus der Gruppe bestehend aus -O, -S, -Se, -PR^{a}, -NR^{a}, oder -COO-Gruppen und R^{a} für Wasserstoff, Alkyl- oder Arylreste steht. Bevorzugt wird für Nu¹ O, NR^{a} und COO-Gruppen eingesetzt. Ganz besonders bevorzugt steht Nu¹ für Sauerstoff.

Der Rest J steht hierbei für ein Element aus der 1. oder 2. Hauptgruppen des Periodensystems. Bevorzugt wird für J = H, Na, Li, Mg, Ca, besonders bevorzugt Li und H eingesetzt.

R, R¹, R², und R³ sind dabei gleich oder verschiedene Reste, die unabhängig voneinander ausgewählt sind aus der Gruppe bestehend aus H, Halogenen, substituierten oder unsubstituierten C₁-C₈ Alkyl-, substituierte oder unsubstituierten C₂-C₈ Alkenyl-, substituierte oder unsubstituierte C₃-C₁₂ Cycloalkyl-, substituierte oder unsubstituierte C₇-C₁₃ Aralkylund substituierte oder unsubstituierte C₆-C₁₄ Arylgruppen, substituierten oder unsubstituierten Nitrogruppen und R¹ kann mit R² oder R³ und R² kann mit R³ einen Ring ausbilden.

R, R¹, R² und R³ können alle Halogene wie Fluor, Chlor, Brom und Iod sein. Bevorzugte sind Fluor und Chlor.

R, R¹, R² und R³ können alle substituierten oder unsubstituierte Alkylreste sein, die die oben genannte C-Atomzahl in der Grundkette enthalten. Bevorzugte unsubstituierte Alkylreste sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl. Besonders bevorzugt sind C₁-C₆-Alkylgruppen wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl. Ganz besonders bevorzugt sind C₁-C₄-Alkylgruppen wie Methyl, Ethyl, n-Propyl, iso-Propyl, n-Butyl, iso-Butyl, sec.-Butyl und tert.-Butyl, wobei diese Gruppen jeweils ein oder mehrere weitere Substituenten tragen können. Bevorzugte weitere Substituenten sind alle Halogenatome, besonders bevorzugt sind Fluor, Chlor und Brom. Insbesondere ganz besonders bevorzugt sind Fluormethyl, Difluormethyl, Trifluormethyl, Chlormethyl, Dichlormethyl, Trichlormethyl, Brommethyl, Dibrommethyl, Tribrommethyl, Petafluorethyl, Perfluorpropyl, und Perfluorbutyl. Ganz besonders bevorzugt sind Fluormethyl, Difluormethyl, Trifluormethyl und Perfluorbutyl.

R, R¹, R² und R³ können alle substituierten oder unsubstituierten Alkenylreste sein, die die oben genannte C-Atomzahl in der Grundkette enthalten. Bevorzugte unsubstituierte Alkenylgruppen sind Alkenylgruppen mit ein bis vier isolierten oder konjugierten Doppelbindungen. Besonders bevorzugt sind Vinyl, 1-Allyl, 3-Allyl, ω-Butenyl, ω-Pentenyl, ω-Hexenyl, 1-cis-Buta-1,3-dienyl und 1-cis-Hexa-1,5-dienyl, wobei diese Gruppen jeweils noch weitere Substituenten tragen können. Bevorzugte substituierte Alkenylgruppen sind Isopropenyl, 1-Isoprenyl, α-Styryl, β-Styryl, 1-cis-1,2-Phenylethenyl und 1-trans-1,2-Phenylethenyl.

R, R¹, R² und R³ können alle substituierten oder unsubstituierten Cycloalkylreste sein, die die oben genannte C-Atomzahl im Ring enthalten. Bevorzugte unsubstituierte Cycloalkyle sind Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Besonders bevorzugt sind Cyclopentyl, Cyclohexyl und Cycloheptyl. Die Cyloalkyle können noch weitere Substituenten tragen. Bevorzugte substituiere Cycloalkylgruppen sind 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thiomethylcyclopentyl und 3-Thiomethylcyclohexyl.

R, R¹, R² und R³ können alle substituierten oder unsubstituierten Aralkylreste sein, die die obengenannte C-Atomzahl entlang der Hauptkette enthalten. Bevorzugt unsubstituierte Aralkylreste sind C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl. Die Substituenten für die Aralkylreste sind Alkyl- , Aryl-, Aralkyl-, Alkoxy-,Aryloxy-, Aralkyloxy-, Dialkylamino-, Halogen-, Keto und Hydroxyl.

R, R¹, R² und R³ können alle substituierten oder unsubstituierten Arylgruppen sein, die die obengenannte C-Atomzahl innerhalb des Ringes enthalten. Bevorzugte unsubstituierte Arylreste sind Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Ganz besonders bevorzugt sind Phenyl, 1-Naphthyl und 2-Naphthyl. Insbesondere bevorzugt ist Phenyl. Diese Arylgruppen können weitere Substituenten tragen.

Unter den substituierten Alkyl-, Alkenyl-, Cycloalkyl-, Aralkyl- und Arylgruppen sind nicht nur die bereits bevorzugten Substituenten zu nennen sondern auch:
- substituierte und/oder unsubstituierte C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl, n-Heptyl, iso-Heptyl und n-Octyl. Bevorzugt sind C₁-C₆-Alkyl, besonders bevorzugt C₁-C₄-Alkyl wie Methyl, Ethyl, n-Propyl, iso-Propyl, n-Butyl, iso-Butyl, sec.-Butyl und tert.-Butyl. Unter den substituierten C₁-C₈-Alkylgruppen sind ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl zu verstehen. Besonders bevorzugt sind Fluormethyl, Difluormethyl, Trifluormethyl und Perflurobutyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Bevorzugt sind Cyclopentyl, Cyclohexyl und Cycloheptyl.
- C₇-C₁₃-Aralkyl, bevorzugt sind C₇-C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl.
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Bevorzugt sind Phenyl, 1-Naphthyl und 2-Naphthyl. Ganz besonders bevorzugt ist Phenyl.
- ein oder mehrere unabhängig voneinander ausgewählte Halogene wie Fluor, Chlor, Brom oder Iod. Besonders bevorzugt sind Fluor und/oder Chlor.
- Nitro und/oder Nitrosogruppen. Besonders bevorzugt ist Nitro.
- C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy. Besonders bevorzugt sind Methoxy, Ethoxy, n-Propoxy und n-Butoxy.
- C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy.
- Silylgruppen der allgemeinen Formel SiR¹⁰R¹¹R¹², wobei R¹⁰ ,R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe. Besonders bevorzugt sind die Trimethylsilylgruppe und die tert.-Butyldimethylsilylgruppe.
- Silyloxygruppen OSiR¹⁰R¹¹R¹², wobei R¹⁰ ,R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe. Besonders bevorzugt sind die Trimethylsilyloxygruppe und die tert.-Butyldimethylsilyloxygruppe.
- fünf- bis sechsgliedrige stickstoffhaltige Heteroarylreste wie *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl. Diese fünf- bis sechsgliedrigen stickstoffhaltigen Heteroarylreste können nun weitere Substituenten enthalten wie C₁-C₈-Alkylgruppen. Bevorzugt sind hier Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl. Besonders bevorzugt sind C₁-C₆-Alkylgruppen. Ganz besonders bevorzugt sind C₁-C₄-Alkylgruppen wie Methyl, Ethyl, n-Propyl, iso-Propyl, n-Butyl, iso-Butyl, sec.-Butyl und tert.-Butyl. Auch diese C₁-C₈-Alkylgruppen an den Heteroarylresten können weitere Substituenten tragen. Dazu gehören:

- halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl. Besonders bevorzugt sind Fluormethyl, Difluormethyl, Trifluormethyl und Perfluorbutyl.
- C₃-C₁₂-Cycloalkyle wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Bevorzugt sind Cyclopentyl, Cyclohexyl und Cycloheptyl;
- C₇-C₁₃-Aralkyle. Bevorzugt sind C₇- bis C₁₂-Phenylalkyle wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl.
- C₆-C₁₄-Aryle. Bevorzugt sind Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Besonders bevorzugt sind Phenyl, 1-Naphthyl und 2-Naphthyl. Ganz besonders bevorzugt ist Phenyl.
- Halogene, wie Fluor, Chlor, Brom oder Iod. Besonders bevorzugt sind Fluor oder Chlor.
- C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy. Besonders sind bevorzugt Methoxy, Ethoxy, n-Propoxy und n-Butoxy.
- C₆-C₁₄-Aryloxygruppen wie Phenoxy, ortho-Kresyloxy, meta-Kresyloxy, *para*-Kresyloxy, α-Naphthoxy, β-Naphthoxy oder 9-Anthryloxy.
- Silylgruppen SiR¹⁰R¹¹R¹², wobei R¹⁰, R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe. Besonders bevorzugt sind die Trimethylsilylgruppe und die tert.-Butyldimethylsilylgruppe.
- Silyloxygruppen OSiR¹⁰R¹¹R¹², wobei R¹⁰ , R¹¹und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe. Besonders bevorzugt sind die Trimethylsilyloxygruppe und die tert.-Butyldimethylsilyloxygruppe. In einer bevorzugten Ausführungsform ist der Rest R ausgewählt aus der Gruppe bestehend aus Mesityl, 2,4,6-Trimethylphenyl oder 2,6-Diisopropylphenyl. Bevorzugt ist R Mesityl oder 2,6-Diisopropylphenyl. Die Reste R¹ und R³ sind bevorzugt ausgewählt aus der Gruppe bestehend aus H, C₁-C₈-Alkylen, C₆ -C₁₄ Arylen, substituierten oder unsubstituierten Nitrogruppen, Fluor und Chlor. Bevorzugt sind R¹ und R³ ausgewählt aus der Gruppe bestehend aus tert.Butyl und Phenyl. R² ist bevorzugt Wasserstoff.

In einer weiteren Ausführungsform können die Reste R¹ bis R³ jeweils zu zweit miteinander zu einem 5 bis 12-gliedrigen Ring verbunden sein. So können an den Positionen von R¹ und R² sowie R¹ und R³ und R² und R³ -(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, - CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit Me = CH₃ Brücken eingeführt werden.

Das Zentralatom M der Verbindungen (II) ist bevorzugt ausgewählt aus der Gruppe bestehend aus Elementen der 4. bis 12. Nebengruppe des Periodensystem. Bevorzugt sind die Elemente Ti, Zr, Hf, Cr, V, Fe, Co, Ni, Ru, Rh, Pd, Os, Ir, Pt, Cu, Ag, Au, Zn, Cd und Hg. Ganz besonders bevorzugt sind Ti, Zr, Cr, V, Fe, Co, Ni, Pd, Cu und Zn. Insbesondere ganz besonders bevorzugt sind Ni und Pd.

Der Rest L¹ ist ein Neutralligand. Unter Neutralligand sind alle dem Fachmann bekannten Neutralliganden zu nennen. Bevorzugt sind organische oder anorganische Neutralliganden ausgewählt aus der Gruppe bestehend aus Phospanen, der allgemeinen Formel (R¹³)ₓPH_{3-x,} Amine mit der allgemeinen Formel (R¹³)ₓNH_{3-x,} Ether mit der allgemeinen Formel (R¹³)₂O, Alkohole mit der allgemeinen Formel (R¹³)OH, Pyridinderivate mit der allgemeinen Formel C₅H₅₋ₓ(R¹³)ₓN, CO, C₁-C₁₂ Alkylnitrilen, C₆-C₁₄ Arylnitrilen und einfach oder mehrfach ethylenisch ungesättigte Doppelbindungssysteme.

Der Rest R¹³ für die allgemeine Formel der Phosphane, der Amine, der Ether, der Alkohole und der Pyridinderivate ist ausgewählt aus der Gruppe bestehend aus H, C₁-C₈ Alkylgruppen, Benzylgruppe und C₆-C₁₄ Arylgruppen. Unter der Definition von C₁-C₈ Alkylgruppen und C₆- C₁₄ Arylgruppen sind alle substituierten und unsubstituierten Alkyl- und Arylgruppen sowie deren Vorzugsbereiche zu verstehen, die bereits für die Rest R, R¹, R² und R³ in dem jeweiligen C-Atomzahlbereich definiert wurden. Der Index x steht für eine ganze Zahl von 0 bis 3. Für die Phosphane und die Amine ist x bevorzugte 3, für die Pyridinderivate ist x bevorzugt 0 oder 1.

Bevorzugte Phosphane für den Rest L¹ sind Triphenylphosphan, Perfluorotriphenylphosphan, Trimethylphosphan, Triethylphosphan, Dibenzophosphol Tricyclohexylphosphan. Bevorzugte Amine sind Trimethylamin, Triethylamin, Dimethybenzylamin. Bevorzugte Ether sind Diethylether, Tetrahydrofuran und Wasser. Bevorzugte Alkohole sind Methanol, Ethanol, Isoporopanol. Bevorzugte Pyridinderivate sind Pyridin, 2- Picolin, 3- Picolin, 4- Picolin, 2,3-Lutidin, 2,5-Lutidin, 2,6-Lutidin, 3,5-Lutidin. Bevorzugte Alkylnitrile sind, Acetonitril, Propionitril sowie Butyronitril, Malonsäurenitril, Oxalsäurenitril, Bernsteinsäurenitril, Acrylsäurenitril, Fumarsäurenitril, Maleinsäurenitril. Bevorzugte Arylnitrile sind Benzonitril, 2-Naphtylnitril, 1-Naphtylnitril Terephtalsäurenitril. Bevorzugte ethylenisch ungesättigte Doppelbindungssysteme sind Ethenyl, Propenyl, cis-2-Butenyl, trans-2-Butenyl, Cyclohexenyl und Norbomenyl.

Als L¹ sind besonders Tetramethylethylendiamin, 1,5-Cyclooctadienyl-Liganden ("COD"), Triphenylphosphan und Acetonitril bevorzugt.

Der Rest L² ist ein anionischer Ligand, der gegebenenfalls mit durch eine oder mehrere kovalente Bindungen mit L¹ verknüpft sein kann. Unter einem anionischen Liganden ist jeder für den Fachmann bekannte anionische Ligand zu verstehen. Bevorzugt sind anionische Liganden ausgewählt aus der Gruppe bestehend aus Halogenidionen, Amidanionen der allgemeinen Formel R¹⁴R¹⁵N, C₁-C₆ Alkylanionen, Allylanionen, Methallylanionen, Benzylanionen und Arylanionen.

Die Reste R¹⁴ und R¹⁵ sind dabei unabhängig voneinander ausgewählt aus der Gruppe bestehend aus H, C₁-C₈ Alkylgruppen, Benzylgruppe und C₆-C₁₄ Arylgruppen, wobei R ¹⁴ und R¹⁵ auch kovalent verknüpft sein können. Unter der Definition der C₁-C₈ Alkylgruppen und der C₆-C₁₄ Arylgruppen sind alle substituierten und/oder unsubstituierten Alkylgruppen und Arylgruppen sowie deren Vorzugsbereiche zu verstehen, die bereits für die Reste R, R¹, R², R³ und R⁴ in dem jeweiligen C-Atomzahlbereich defmiert wurden.

Bevorzugte Halogenidionen für die Reste L² und L³ sind Chlorid und Bromid. Bevorzugte Amidanionen sind Amid, Dimethylamid, Diethylamid, Diisopropylamid, Diphenylamid, Anilid, Methylphenylamid Bevorzugte Alkylanionen sind Methyl, Ethyl, n-Propyl, 1-Propyl, n-Butyl, tert.-Butyl und Hexyl. Bevorzugte Allylanionen sind 1,3-arylsubstituierte Allylanionen, 1,3 Bistrimetylsilylsubstituierte Allylanionen aber insbesondere die Stammverbindung C₃H₅⁻. Anionen der Metacrylsäureester 2-arylsubstituierte Metallylanionen und die Stammverbindung C₄H₈⁻ sind die bevorzugten Methallylanionen. Bevorzugte ist weiterhin das Benzylanion. Phenyl ist das bevorzugt Arylanion.

In einer bevorzugte Metallverbindungen der allgemeinen Formel M(L¹)_{W}(L²)_{Y}(L³)_{z} sind solche bei denen die Reste L¹ und/oder L² mit L³ durch eine kovalente Bindung miteinander verknüpft sind. Besonders bevorzugt sind 1,5-Cyclooctadienyl-Liganden ("COD"), 1,6-Cyclodecenyl-Liganden oder 1,5,9-*all-trans*-Cyclododecatrienyl-Liganden.

In einer besonderen Ausführungsform ist L¹ Tetramethylethylendiamin, wobei nur ein Stickstoff mit dem M koordiniert ist.

Die Indices W, Y und Z sind unabhängig voneinander eine ganze Zahl von 0 bis 3, wobei für den Fall das W=0 ist die Summe von Y und Z 2, 3 oder 4 ist. In einem ganz besonders bevorzugten Fall ist W 1 oder 2 und Y und Z 0 oder 1.

Bei dem erfindungsgemäßen Verfahren werden Verbindungen der Formel (I) mit Metallverbindungen der Formel (II) in die dem Fachmann bekannten Lösemittel gelöst. Bevorzugte Lösemittel sind Benzol, Toluol, Ethylbenzol, ortho-Xylol, meta-Xylol oder para-Xylol, Chlorbenzol, Cyclohexan, Acetonitril, Tetrahydrofuran, Methylenchlorid oder Gemischen derselben. Die Umsetzung wird in dem dem Fachmann bekannten Temperaturbereich durchgeführt. Bevorzugt wird die Reaktion in einem Temperaturbereich von -100°C bis +150°C, besonders bevorzugt im Bereich von -78°C bis +100°C durchgeführt. Die Umsetzung der Verbindungen der Formel (I) mit den Metallverbindungen der Formel (II) muss unter Sauerstoff- und Feuchtigkeitausschluß erfolgen.

Das Molverhältnisse zwischen Verbindung der Formel (I) und M aus Formel (II) liegt im Bereich von 5:1 bis 1:5. Bevorzugt im Bereich von 1:1 bis 1:3, besonders bevorzugt sind stöchiometrische Mengen.

Für die Polymerisation ist es nicht notwendig, den Katalysator aus dem erfindungsgemäßen Verfahren vor der Polymerisation separat in situ herzustellen. Man kann auch die Verbindungen der Formel (I) und die Metallverbindungen der Formel (II) in einen mit Monomer und Cokatalysator bereits beaufschlagten Reaktor einführen, so dass die katalytisch aktive Species sich erst in situ während der Polymerisation bildet.

Wählt man L² in M(L¹)_{W}(L²)_{Y} aus der Gruppe der C₁-C₆-Alkylgruppen, Benzylanionen oder Arylanionen aus, so wird der Katalysator bevorzugt in situ vor der Polymerisation gebildet.

Die Herstellung der Verbindungen der allgemeinen Formel (I) gelingt in einer zweistufigen Reaktion. In der ersten Stufe werden Aromaten der allgemeinen Formel (III) 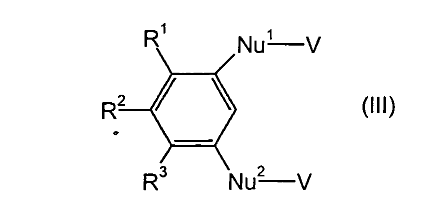 wobei
- V: für Wasserstoff, ein Alkali- oder Erdalkalimetall steht
mit elektrophilen Aryldiazoniumsalzen der allgemeinen Formel IV

R―N₂+ A- (IV)

in denen die Reste Nu¹, Nu², R, R¹, R², R³ wie oben definiert sind und A⁻ ein Anion starker Säuren ausgewählt aus der Gruppe bestehend aus F⁻, Cl⁻, Br⁻, T, SO₄²⁻, NO₃⁻, ClO₄⁻ , ClO₃⁻, CF₃COO⁻, CF₃SO₃⁻, BF₄⁻, PF₆⁻, B(C₆F₅)₄⁻ oder anionischen Metallat-Komplexe, darstellt.

Die Herstellung der Verbindungen der allgemeinen Formel (I) erfolgt im allgemeinen in einer zweiten Reaktion aus Liganden der allgemeinen Formel (III), in denen die Reste wie oben definiert sind. Zur Synthese der Verbindungen der Formel (I) werden die Liganden der Formel (III) mit Hilfe einer starken Base vom Rest V befreit.

Als Base können die dem Fachmann bekannten Metallalkyle verwendet werden. Bevorzugt sind Methyllithium, Ethyllithium, n-Butyllithium, sec.-Butyllithium, tert.-Butyllithium, Hexyllithium, Grignard-Verbindungen wie Ethylmagnesiumbromid, weiterhin Lithiumamid, Natriumamid, Kaliumamid, Kaliumhydrid oder Lithiumdiisopropylamid ("LDA"). Als Lösemittel haben sich hochsiedende Lösemittel wie Toluol, ortho-Xylol, meta-Xylol, para-Xylol, Ethylbenzol oder Mischungen derselben als bevorzugt geeignet erwiesen, des Weiteren nichtcyclische oder cyclische Ether wie 1,2-Dimethoxyethan, Tetrahydrofuran oder Diethylether.

Diese Entfernung des Restes V ist im Bereich von 1 min bis 12 Stunden beendet. Bevorzugt ist eine Reaktionsdauer von 2 bis 10 Stunden, insbesondere bevorzugt sind 3 bis 5 Stunden. Während der Reaktion liegt die Temperatur im Bereich von -196 bis 0°C. Bevorzugt ist ein Bereich von -90°C bis -20°C. Die Metallierung des Liganden der Formel (III) erfolgt unter Luft- und Feuchtigkeitsausschluss.

Für die Umsetzung des Liganden der Formel (III) mit der Base können alle dem Fachmann bekannten aprotischen, polaren oder unpolaren Lösemittel verwendet werden. Bevorzugt sind aprotische, polare Lösemittel wie Methylenchlorid, Acetonitril, Acrylnitril, Benzonitril, Tetrahydrofuran, Diethylether oder Lutidin.

Nach der Umsetzung mit der Base wird dass Lösemittel in der dem Fachmann bekannten Weise vom Produkt entfernt. Der erhaltene metallierte Ligand kann auf die dem Fachmann bekannte Weise gereinigt werden. Bevorzugte Reinigungsmethode ist die Kristallisation.

Die Herstellung von Diazoniumsalzen wird von a) Zollinger, H. in Chemie der Azofarbstoffe, **1958**, Birckhäuser Verlag, b) von Hashida, Y.; Landells, R.G.M.; Lewis, G.E.; Szele, I; Zollinger, H. in *J. Am. Chem. Soc.* **1978**, *100,* 2816, c) von Laali, K.; Szele, I.; Zollinger, H. in *Helv. Chim. Acta* **1983**, *66,* 1737 und d) im Hoben Weyl, Methoden in der Organischen Chemie, Band X/3 S.220 beschrieben und ist dem Fachmann allgemein bekannt.

Bei der Diazotierung werden aromatischen Amine in Gegenwart von Lewis- oder Brönstedsäure und Nitrosierungsmitteln wie organischen oder anorganischen Nitriten umgesetzt. Als Lewissäure haben sich BF₃, als Brönstedsäuren HBF₄, Schwefelsäure, HCl, HF bewährt. Die Reaktionsdauer beträgt 1 bis 48 Stunden, bevorzugt 1 bis 15 Stunden. Als Solventien haben sich für anorganische Nitrite sowohl starke Säuren als auch protische polare Lösungsmittel wie Wasser, Methanol oder Mischungen daraus als bevorzugt erwiesen. Hingegen ist bei Verwendung von organischen Nitriten, wie *iso*-Amylnitrit die Verwendung von aprotischen polaren Lösemitteln, wie Tetrahydrofuran oder Estern besonders aber Methylenchlorid vorzuziehen. Dabei lassen sich die Diazoniumsalze mit schwachkoordinierenden Anionen, wie BF₄⁻, als schwerlösliche Feststoffe isolieren.

Die Diazoniumsalze werden anschließend mit aktivierten Aromaten wie Resorcinderivaten, 1,3-Dithiophenolen, 1,3-(Aralkyl-N,N')-phenylendiaminen, 1,3-dicarboxybenzolderivaten zur Reaktion gebracht. Dabei werden im Fall von Phenolen zunächst die entsprechenden Alkaliphenolate hergestellt und die Reaktion im schwach saurem bis alkalischen pH-Bereich, bevorzugt im pH-Bereich 14 bis 6. durchgeführt. Im Anschluss daran wird die gebildete Azoverbindung durch gängige Methoden wie Filtration oder Phasentrennung gereinigt. Eine weitergehende Reinigung erfolgt durch Säulenchromatographie oder Kristallisation mittels geeigneter Lösemittel.

Die Katalysatoren die nach dem erfmdungsgemäßen Verfahren erhältlich sind werden können mit Cokatalysatoren umgesetzt werden. Geeignete Cokatalysatoren sind ausgewählte aus der Gruppe bestehend aus Aluminium- und/oder Bor-Verbindungen mit elektronenziehenden Resten. Bevorzugt werden Bortrifluorid, Trispentafluorphenylboran, Trispentafluorphenylaluminium, *N,N*-Dimethylanilinium-tetrakis-pentafluorphenylborat, Tri-n-butylammonium-tetrakis-pentafluorphenylborat, *N,N*-Dimethylanilinium-tetrakis-(3,5-bisperfluormethyl)-phenylborat, Tri-n-butylammonium-tetrakis-(3,5-bisperfluormethyl)-phenylborat, sowie Tritylium-tetrakispentafluorphenylborat. Besonders bevorzugt sind N,N-Dimethylanilinium-tetrakis-pentafluorphenylborat, Tritylium-tetrakispentafluorphenylborat und Trispentafluorphenylboran.

Verwendet man Bor- oder Aluminiumverbindungen als Cokatalysatoren für die Katalysatoren aus dem erfmdungsgemäßen Verfahren, so setzt man sie im allgemeinen in einem molaren Verhältnis von 1:10 bis 10:1, bezogen auf M, ein; bevorzugt 1:2 bis 5:1 und besonders bevorzugt 1:1,5 bis 1,5:1.

Eine andere geeignete Klasse von Cokatalysatoren sind Aluminoxane.

Die Struktur der Aluminoxane ist nicht genau bekannt. Wie in DE-A 3 007 725 beschrieben, handelt es sich bei ihnen um Produkte, die durch vorsichtige partielle Hydrolyse von Aluminiumalkylen erhalten werden. Diese Produkte liegen nicht rein vor, sondern als Gemische von offenkettigen und cyclischen Strukturen des Typs (V a) und (V b). Diese Gemische liegen vermutlich in einem dynamischen Gleichgewicht zueinander vor.

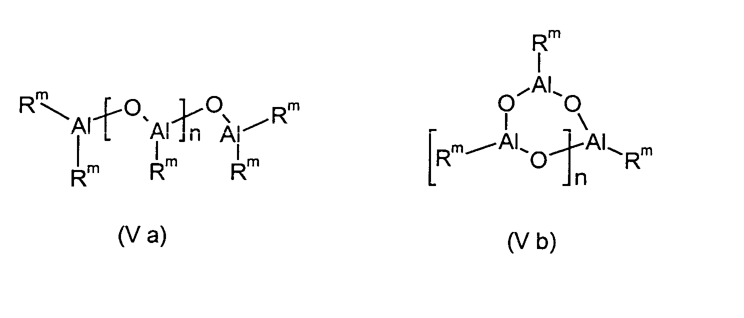

In Formel (V a) und (V b) sind die Reste R^{m} unabhängig voneinander ausgewählt aus der Gruppe bestehend aus substituierten oder unsubstituierten C₁-C₁₂ Alkyl-, substituierten oder unsubstituierten C₃-C₁₂ Cycloalkyl, substituierten oder unsubstituierten C₇-C₂₀ Aralkyl, substituierten oder unsubstituierten C₆-C₁₄ Arylgruppen.

Unter den C₁-C₁₂-Alkylgruppen sind, alle Alkylgruppen mit dieser C-Atomanzahl in der Hauptkette zu verstehen.

Bevorzugt C₁-C₁₂-Alkylgruppen sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl und n-Dodecyl. Besonders bevorzugt sind C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl. Ganz besonders bevorzugt ist Methyl.

Unter den C₃-C₁₂ Cycloalkylgruppen sind alle Cycloalkylgruppen mit dieser C-Atomanzahl im Ring zu verstehen.

Bevorzugte C₃-C₁₂-Cycloalkyl sind Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Besonders bevorzugt sind Cyclopentyl, Cyclohexyl und Cycloheptyl.

Unter den C₇-C₂₀ Aralkylgruppen sind alle Aralkylgruppen mit dieser C-Atomanzahl im Grundgerüst zu verstehen.

Bevorzugt sind C₇- bis C₂₀-Aralkyl, besonders bevorzugt sind C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl. Ganz besonders bevorzugt ist Benzyl.

Unter den C₆-C₁₄-Arylgruppen sind alle Arylgruppen mit dieser C-Atomanzahl im Ring zu verstehen. Bevorzugt sind C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Besonders bevorzugt sind Phenyl, 1-Naphthyl und 2-Naphthyl. Ganz besonders bevorzugt ist Phenyl.

Der Parameter n steht in der Formel (V a) und (V b) für eine ganze Zahl von 0 bis 40, bevorzugt von 1 bis 25 und besonders bevorzugt von 2 bis 22.

In Organometallics 1996, 15, 2213-26 werden von Y. Koide, S.G. Bott, A.R. Barron auch käfigartige Strukturen für die Aluminoxane diskutiert. Auch A.R. Barron berichtet in Macromol. Symp. 1995, 97, 15-25 über solche Strukturen. Sowohl die käfigartigen Strukturen als auch die Strukturen der Formeln (V a) und (V b) sind sie als Cokatalysatoren für den Katalysator, der nach dem erfindungsgemäßen Verfahren erhalten wird, geeignet.

Gemische verschiedener Aluminoxane sind in den Fällen besonders bevorzugte Cokatalysatoren, in denen in einer Lösung eines Paraffms wie n-Heptan oder Isododekan, polymerisiert wird. Ein besonders bevorzugtes Gemisch ist das kommerziell bei der Firma Witco GmbH erhältliche CoMAO mit einer Formel von

[(CH₃)_{0,9}(iso-C₄H₉)_{0,1}AlO]ₘ.

wobei m zwischen 6 und 25 liegt.

Um den Katalysator, der aus dem erfindungsgemäßen Verfahren erhalten wird, mit Aluminoxanen umzusetzen, ist im Allgemeinen ein Überschuss von Aluminoxan, bezogen auf M, notwendig. Sinnvolle Molverhältnisse M : AI liegen im Bereich von 1:10 bis 1:10 000, bevorzugt 1:50 bis 1:1000 und besonders bevorzugt 1:100 bis 1:500.

Cokatalysatoren für die Katalysatoren aus dem erfindungsgemäßen Verfahren abstrahieren nach gängiger Vorstellung einen Liganden L¹ oder L². Bei dem Cokatalysator kann es sich anstatt um Aluminiumalkylverbindungen der allgemeinen Formel (V a) oder (V b) oder den vorstehend beschriebenen Aluminium- oder Bor-Verbindungen mit elektronenziehenden Resten auch um Olefinkomplexe des Rhodiums oder Nickels handeln.

Bevorzugte Ni-(Olefin)-Komplexe, die kommerziell bei Aldrich erhältliche sind, besitzen folgende allgemeine Struktur: Nickel-(Olefin)y-Komplexe mit y = 1, 2, 3 oder 4. Besonders bevorzugt sind Ni(C₂H₄)₃, Ni(1,5-Cyclooctadien)₂ (Ni(COD)₂), Ni(1,6-Cyclodecadien)₂, oder Ni(1,5,9-all-trans-Cyclododecatrien)₂. Ganz besonders bevorzugt ist Ni(COD)₂.

Besonders geeignete Rhodium-(Olefm)-Komplexe sind gemischte Ethylen/1,3-Dicarbonylkomplexe des Rhodiums wie Rhodium-Acetylacetonat-Ethylen Rh (acac) (CH₂=CH₂)_{2,} Rhodium-Benzoylacetonat-Ethylen Rh (C₆H₅-CO-CH-CO-CH₃) (CH₂=CH₂)_{2,} oder Rh (C₆H₅-CO-CH-CO-C₆H₅) (CH₂=CH₂)₂. Besonders bevorzugt ist Rh (acac) (CH₂=CH₂)₂.

Diese Verbindung lässt sich nach den Angaben von R. Cramer aus Inorg. Synth. 1974, 15, 14 synthetisieren.

Die Leichtigkeit der Startreaktion für die Polymerisation, hängt entscheidend von der Natur des Liganden L' ab. Derartig labilkoordinierende Liganden L' sind vorzugsweise Verbindungen die über eine olefmische Gruppe verfügen und dadurch das Metall komplexieren. Weiterhin eignen sich insbesondere auch Nitrile und Verbindungen mit Etherfunktionen.

Der Katalysator erhältlich aus dem erfindungsgemäßen Verfahren und der Cokatalysator bilden zusammen ein Reaktionsprodukt, das als Katalysatorsystem in der Polymerisation aktiv ist.

Durch Zugabe von weiterem Aluminiumalkyl der allgemeinen Formal Al(R^{m})₃ oder Aluminoxanen kann die Aktivität des erfindungsgemäßen Katalysatorsystems erhöht werden, insbesondere dann, wenn Verbindungen der allgemeinen Formel (V a) oder (V b) oder die vorstehend genannten Aluminium- oder Bor-Verbindungen mit elektronenziehenden Resten als Cokatalysatoren verwendet werden; Aluminiumalkyle der allgemeinen Formel Al(R^{m})₃ oder Aluminoxane können auch als Molmassenregler wirken. Ein weiterer effektiver Molmassenregler ist Wasserstoff. Besonders gut kann man die Molmasse durch die Reaktionstemperatur und den Druck regeln. Für den Fall, dass die Verwendung einer Bor-Verbindung wie oben beschrieben gewünscht ist, ist die Zugabe eines Aluminiumalkyls der allgemeinen Formel Al(R^{m})₃ besonders bevorzugt.

Es wurde gefunden, dass der Katalysator erhältlich nach dem erfindungsgemäßen Verfahren geeignet ist, um Olefine in Gegenwart polarer Zusätze wie Estern , Ethern und Nitrilen zu polymerisieren. Besonders gut polymerisiert und copolymerisiert er Ethen.

Druck- und Temperaturbedingungen während der Polymerisation können in weiten Grenzen gewählt werden. Als Druck hat sich ein Bereich von 0,5 bar bis 4000 bar als bevorzugt erwiesen, besonders bevorzugt sind 10 bis 75 bar oder Hochdruckbedingungen von 500 bis 2500 bar. Als Temperatur hat sich ein Bereich von 0 bis 120°C als bevorzugt erwiesen, besonders bevorzugt sind 40 bis 100°C und ganz besonders bevorzugt 50 bis 85°C.

Als Monomer sind die folgenden Olefine zu nennen: Ethylen, Propylen, 1-Buten, 1-Penten, 1-Hexen, 1-Octen, 1-Decen oder 1-Undecen, wobei Propylen und Ethylen bevorzugt und Ethylen besonders bevorzugt ist.

Als Comonomere sind α-Olefine, Styrol, Isobuten, Cyclopenten, Cyclohexen, Norbornen und Norbomadien geeignet. Bevorzugt sind 1-Buten, 1-Penten, 1-Hexen, 4-Methyl-1-Penten, 1-Octen, 1-Decen oder 1-Undecen. Die α-Olefine werden in Mengen von 0,1 bis 20 mol-% bezogen auf das erhaltende Polymer eingesetzt. Bevorzugt sind α-Olefinemengen im Bereich von 0,5 bis 10 mol-%.

Als Lösemittel werden Hexan, Heptan, Toluol, ortho-Xylol, meta-Xylol, para-Xylol, Ethylbenzol sowie Mischungen derselben, Diethylether, Tetrahydrofuran, Chlorbenzol, 1,3-Dichlorbenzol, Dichlormethan und - bei Hochdruckbedingungen - überkritisches Ethylen verwendet. Bevorzugt sind Hexan, Toluol, Chlorbenzol und Dichlormethan.

Der Katalysator erhältlich durch das erfmdungsgemäße Verfahren lässt sich bei der Polymerisation mit Wasserstoff regeln, d.h. durch Zugabe von Wasserstoff lässt sich das Molekulargewicht der durch das Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt.

Der Katalysator erhältlich durch das erfindungsgemäße Verfahren kann auch gemeinsam mit einem oder mehreren anderen, an sich bekannten Polymerisationskatalysatoren verwendet werden. So kann er zusammen mit
- Ziegler-Natta-Katalysatoren,
- geträgerten Metallocenkatalysatoren der Übergangsmetalle der Gruppen 4. bis 6. Nebengruppe des Periodensystems der Elemente,
- Katalysatoren der späten Übergangsmetalle wie in WO 96/23010 beschrieben,
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren.

Ein weiterer Gegenstand der Erfindung ist, dass sich der Katalysator, erhältlich durch das erfindungsgemäße Verfahren, insbesondere einer mit M = Ni, in besonderer Weise zur Polymerisation oder Copolymerisation von 1-Olefinen, bevorzugt Ethylen, in Emulsionspolymerisationsverfahren eignen.

Neben anderen 1-Olefinen als Comonomeren, wie Propen, 1-Buten, 1-Hexen, 1-Octen oder 1-Decen, lassen sich mit Hilfe des Katalysatorsystems auch polare Comonomere einbauen, wobei 0,1 bis 50 mol-% Comonomer bevorzugt verwendet werden können. Als polare Comonomere sind bevorzugt
- Acrylate wie Acrylsäure, Acrylsäuremethylester, Acrylsäureethylester, Acrylsäure-(2-ethyl)-hexylester, Acrylsäure-n-butylester oder Acrylsäure-tert.-butylester;
- Acrylnitril
- Methacrylsäure, Methacrylsäuremethylester, Methacrylsäureethylester, Methacrylsäure-n-butylester oder Methacrylsäure-tert.-butylester;
- Vinylcarboxylate, wobei Vinylacetat besonders bevorzugt ist,
- ungesättigte Dicarbonsäuren, besonders bevorzugt ist Maleinsäure,
- ungesättigte Dicarbonsäurederivate, besonders bevorzugt sind Maleinsäureanhydrid und Maleinsäurealkylimide wie Maleinsäuremethylimid.

Weiterhin lassen sich Terpolymere mit mindestens 2 der oben aufgeführten polaren Monomeren oder einer Mischung von polarem und unpolarem Monomer jeweils im Molbereich zwischen 0,1 und 99,8 mol % und Ethylen herstellen.

Das mit Hilfe des Katalysators, erhältlich nach dem erfmdungsgemäßen Verfahren, hergestellte Polymer lässt sich durch die dem Fachmann bekannten Möglichkeiten wie spritzgießen, extrudieren, schäumen zu weiteren Formartikeln verarbeiten.

### Beispiele

Die folgenden Arbeitsbeispiele erläutern die Erfindung.

### Allgemeine Vorbemerkungen:

Alle Arbeiten wurden mittels Schlenkrohrtechnik unter Ausschluss von Luft und Feuchtigkeit in einer gereinigten Argonatmosphäre durchgeführt. Die Apparaturen wurden vor Benutzung im Ölpumpenvakuum ausgeheizt und mit gereinigtem Argon gespült. Die Befüllung der NMR-Röhrchen erfolgte ebenfalls unter Argon.

Die Polymerviskosität wurde nach ISO 1628-3 bestimmt. Die Molmassen wurden mittels GPC bestimmt und in Anlehnung an DIN 55672 durchgeführt:

Alle Lösungsmittel, die zur Reaktionsführung verwendet wurden, inklusive derjenigen, welche zur säulenchromatographischen Reinigung dienten, waren wasser- und luftsauerstofffrei. Zur dünnschichtchromatographischen Untersuchung von Reaktionsverläufen dienten Dünnschichtplatten der Firma Machery-Nagel mit Kieselgel- (Polygram® SIL G/UV₂₅₄) bzw. Aluminiumoxid-Beschichtung (Polygram® ALOX N/UV₂₅₄). Zur Säulenchromatographie fanden folgende Sorbentien Verwendung:
- Kieselgel 60, Korngröße 40 - 60 µm, 230 - 400 mesh (ASTM) (Fa. Baker)
- Kieselgur, gereinigt, geglüht, Erg. B. 6 (Fa. Riedel-de Haën).

NMR-Spektren wurden in deuterierten Lösungsmitteln bei 293 K aufgenommen. Die chemische Verschiebung wird in ppm (parts per million) angegeben.
^{**1**}**H-NMR:** Standard intern durch Lösungsmittel, CDCl₃ δ = 7.26; C₆D₆ δ = 7.16; rel. SiMe₄ (mit SiMe₄ δ = 0).
^{**13**}**C{**^{**1**}**H)-NMR:** Standard intern durch Lösungsmittel, CDCl₃ δ = 77.0; C₆D₆ δ = 128.0; rel. SiMe₄ (mit SiMe₄ δ = 0).

### Darstellung der erfindungsgemäßen Liganden:

### Allgemeine Arbeitsvorschrift zur Diazotierung (Beispiel 1.1 uns 1.2)

Das Mesitylamin (45 mmol) und eine mit 25 ml Wasser verdünnte HBF₄-Lösung (180 mmol, 23,5 ml einer 48%igen Lösung in Wasser) werden bei 0°C zur Reaktion gebracht. Anschließend wird NaNO₂ (45 mmol, 3,1 g) gelöst in 4 ml Wasser langsam zugetropft, bis eine sichtbare Reaktion der Reaktionsmischung auf Jod-Kalium-Stärkepapier eintritt. Nach 5 min Rühren das Diazoniumsalz zu einer Lösung des 1,3-Dihydroxyarylderivats (45 mmol) in einer 2n NaOH-Lösung (400 mmol) gegeben. Anschließend wird für weitere 2 h bei 0°C gerührt und 150 ml Toluol zugegeben. Nach erfolgter Phasenseparation wird die organische Phase mit 100 ml Wasser und 20 ml 20 % HCl versetzt und gut durchmischt. Nach erneuter Trennung der Phasen wird 2 mal mit je 50 ml Wasser gewaschen und die organische Phase von allen flüchtigen Bestandteilen im Vakuum befreit. Anschließend wird der orangerote Rückstand in 60 ml Pentan aufgenommen und filtriert. Der Rückstand wird anschließend getrocknet. Weiteres Produkt kann aus dem Filtrat durch Kristallisation bei -20°C erhalten werden.

### Zur Diazotierung mit 2,6-Diisopropylanilin wurde typischerweise wie folgt vorgegangen:

Die Liganden werden durch eine Kupplungsreaktion des Diazoniumsalzes mit den entsprechenden Phenolen erhalten. Das Diazoniumsalz wird durch Reaktion des 2,6-Diisopropylanilin (20 mmol) mit Isoamylnitrit (2,9 g, 3,4 ml, 25 mmol) und BF₃*OEt₂ (3,1 g; 2,8 ml; 22 mmol) in Methylenchlorid (200 ml) bei -10°C innerhalb von 60 min hergestellt. Nach Filtration des Diazoniumsalzes (Wasserstrahlvakuum) in der Kälte wird dieses bei - 20°C in THF (50 ml) suspendiert und in eine Lösung von Phenol (20 mmol) (Phenol in möglichst wenig Ethanol lösen und NaOH (10 g, 250 mmol) in 100 ml Wasser zufügen) bei - 20°C eingetragen (1 h Rühren). Dann wird die Reaktionslösung unter gutem Rühren auf 25°C erwärmt und weiter 15 h gerührt. Zur Aufarbeitung wird mit Hexan versetzt, mit verdünnter HCl innig vermischt, anschließend mit Wasser bis zu pH 7 gewaschen und die wässrige Phase abgetrennt. Nach Trocknung der organischen Phase über Na₂SO₄ wird der Farbstoff über Kieselgel mit Hexan/Methylenchlorid = 3/1 chromatografiert und kann zur weiteren Reinigung aus Methanol bei -20°C kristallisiert werden.

### Überführung der sauren Azofarbstoffe in die entsprechenden Li-Salze (Beispiele 1.1 bis 1.2)

Der Azofarbstoff (14.2 mmol) wird in 150 ml Tetrahydrofuran gelöst und auf -78°C gekühlt. Vorzugsweise kann auch Diethylether verwendet werden, wenn der Azofarbstoff ausreichend löslich ist. Dann wird n-BuLi (2.7 m in Heptan; 5.8 ml, 15.6 mmol) zugetropft und die Reaktionsmischung bei -78°C für lh gerührt. Nach Erwärmen auf 25°C wird das Lösungsmittel entfernt und 60 ml n-Hexan zugegeben. Das gereinigte Produkt wird durch Kristallisation bei -20°C erhalten und kann direkt weiterverarbeitet werden.

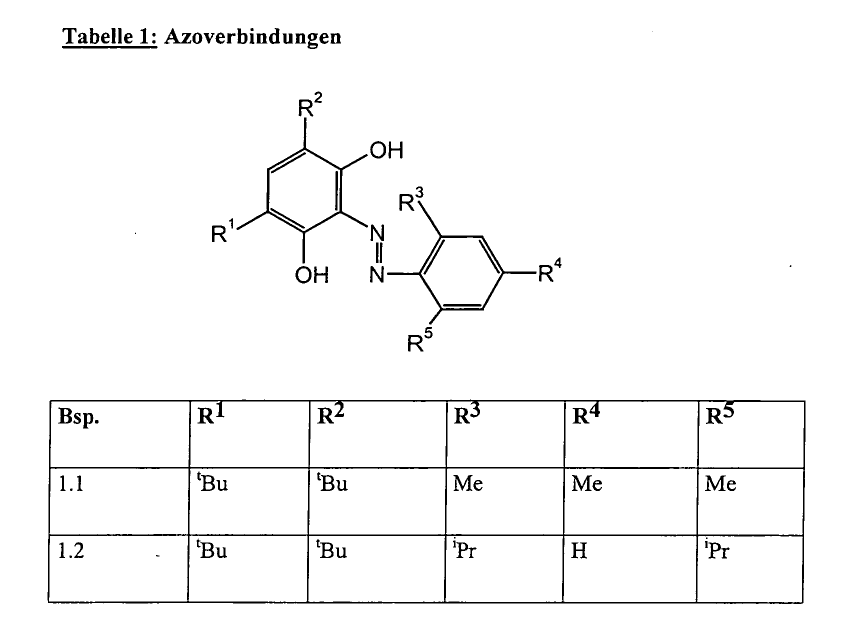

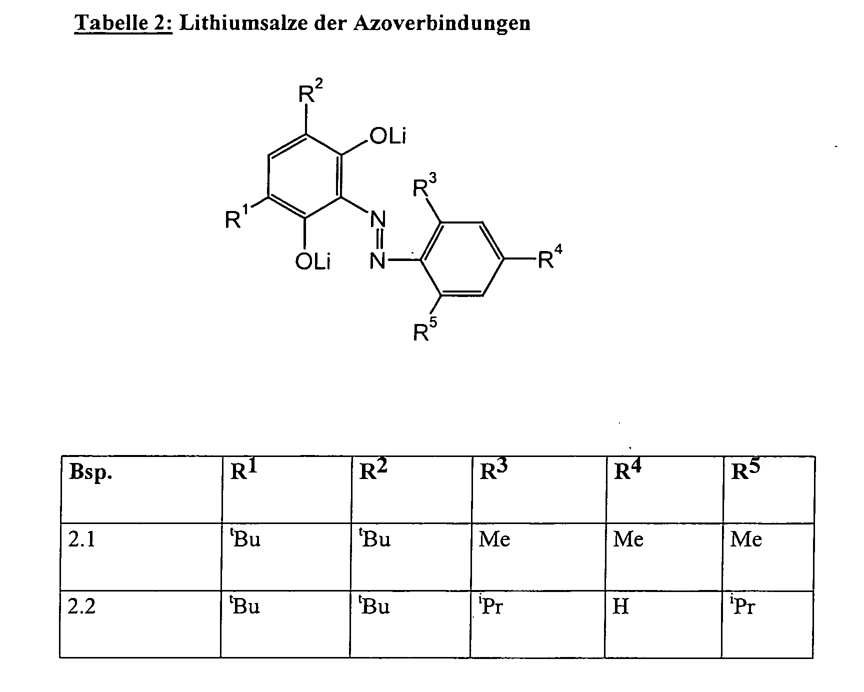

### Analytische Daten zu den Verbindungen 1.1 bis 1.2:

### Azoverbindungen:

### Beispiel 1.1:

**Anal**. Ber. für C₂₃H₃₂N₂O₂ (368,51) C, 74,96; H, 8,75; N, 7,60; O, 8,68 Gef.: C, 75,3; H, 8,8; N, 7,2. **Sm**p.: 160°C. ^{**1**}**H-NMR** in CDCl₃, [δ]: 1,42 (s, 18 H, t-Bu), 2,35 (s, 3 H, CH₃), 2,45 (s, 6 H, CH₃), 6,99 (s, 2 H, CH, Ar), 7,35 (s, 1 H, CH, Ar). ^{**13**}**C{**^{**1**}**H}-NMR** in CDCl₃, [δ]: 19,4 (CH₃, p-Me), 21,1 (CH₃, o-Me), 29,8 (CH₃, t-Bu), 34,5 (C, t-Bu), 127,0 (C, Ar), 127,9 (C, Ar), 130,2 (CH, Ar), 131,6 (CH, Ar), 131,7 (CH, Ar), 139,2 (C, Ar), 145,9 (C, Ar). **IR**: 1286 (m, ν_{(N=N)}), 3401 (s, ν_{(OH,NH)}).

### Beispiel 1.2:

**Anal.** Ber. für C₂₆H₃₈N₂O (394,59) C, 79,14; H, 9,71; N, 7,10; O, 4,05 Gef.: C, 79,3; H, 9,6; N, 6,6. **Smp**.: 129°C. ^{**1**}**H-NMR** in CDCl₃, [δ]: 1,22 (d, 6 H, ³J_{HH} = 6,9 Hz, CH₃, i-Pr), 1,43 (s, 18 H, t-Bu), 3,09 (sp, 2 H, ³J_{HH} = 6,9 Hz, CH, i-Pr), 7,28 (d, 2 H, ³J_{HH} = 7,3 Hz, CH, Ar), 7,32 (t, 1 H, ³J_{HH} = 7,3 Hz, CH, Ar), 7,42 (s, 1 H, CH, Ar), 8,0 (br, 1 H, OH), 13,3 (br, 1 H, OH). ^{**13**}**C{**^{**1**}**H}-NMR** in CDCl₃, [ ]: 23,9 (CH₃, i-Pr), 27,9 (CH, i-Pr), 29,6 (CH₃, t-Bu), 34,5 (C, t-Bu), 123,8 (CH, Ar), 126,9 (C, Ar), 128,4 (CH, Ar), 132,5 (CH, Ar), 140,6 (C, Ar), 147,9 (C, Ar). **IR**: 1286 (m, ν_{(N=M)}), 3390 (s, ν_{(OH, NH}).

### Polymerisationsbeispiele:

### Katalysatormischung Nickel [Ni]

Das Li-Salz der Azoverbindung wird in 1 ml Toluol gelöst. Zu dieser Lösung wird 1 ml Chlorbenzol gegeben. Anschließend wird Ni(COD)₂ gelöst in 1 ml Toluol bei -20°C zugegeben. Die erhaltene Lösung wird auf 25°C erwärmt und sodann zur Polymerisation eingesetzt.

### Allgemeine Arbeitsvorschrift zur Polymerisation

In einem sekurierten 300 ml Stahlautoklaven mit Glaseinsatz wurden Toulol, der polare Zusatz, der Aktivator, und Lösung der Katalysatormischung in dieser Reihenfolge mittels einer Kanüle zugegeben. Anschließend wurde die Mischung 0.5 h bei 30°C gerührt und anschließend der Ethendruck auf 8 bar eingestellt. Die Polymerisationsdauer betrug 2 h, wobei bei der exothermen Reaktion keine Temperaturkontrolle stattfand. Nach beendeter Reaktion wurde der Reaktor entspannt und die Polymerisation durch Zugabe einer Mischung aus je 5 ml Isopropanol/Methanol gestoppt. Anschließend wurde der Autoklaveninhalt in 300 ml Methanol/HCl gegossen und das ausgefallene Polymer nach Filtration getrocknet.

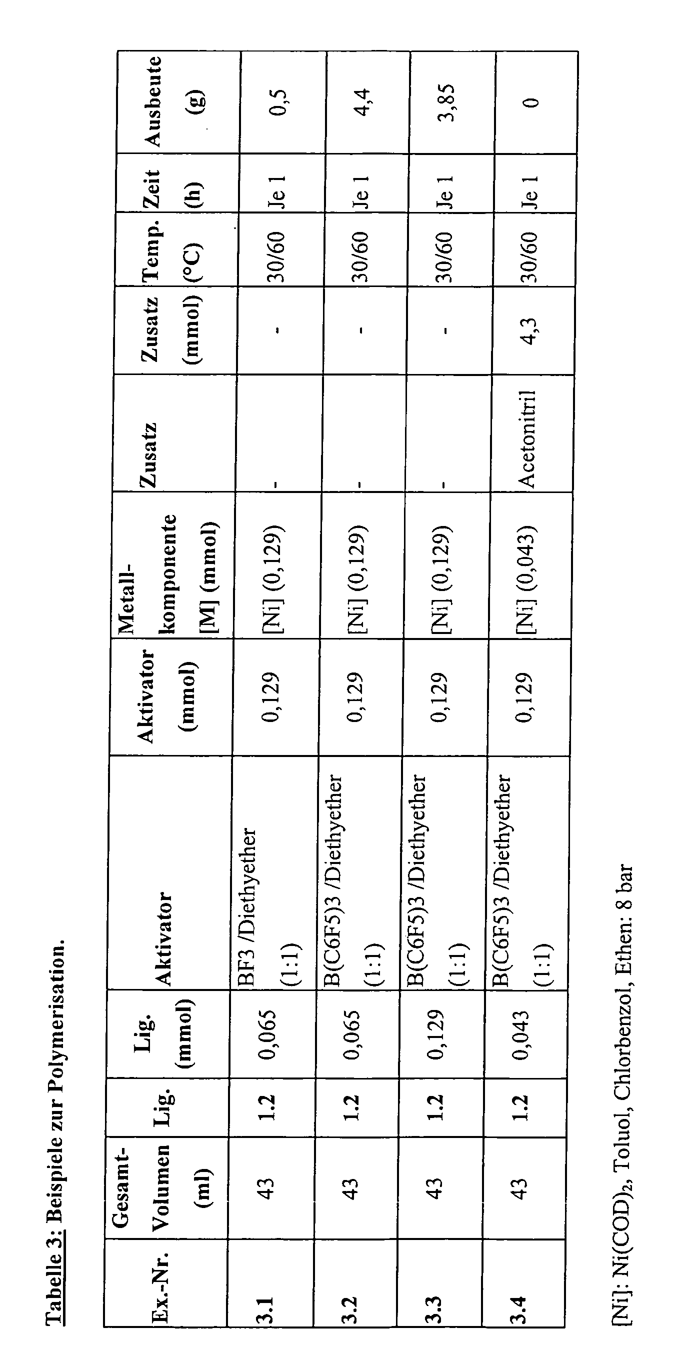

## Patentansprüche

1. Verfahren zur Herstellung eines Katalysators umfassend die Schritte
a) Lösen von Verbindungen der allgemeinen Formel (I) 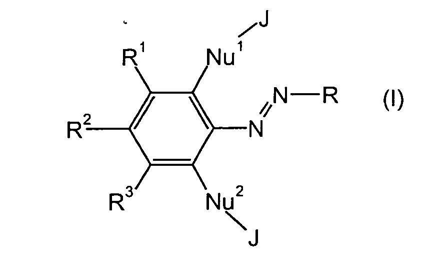 in einem unpolaren Lösungsmittel, wobei
Nu¹,Nu² unabhängig voneinander für -O, -S, -Se, -PR^{a}, -NR^{a}, -COO-Gruppen mit
R^{a} Wasserstoff, substituierte oder unsubstituierte Alkyl- oder Arylreste steht und
J ein Element ausgewählt aus der 1. oder 2. Hauptgruppe des Periodensystems
R, R¹, R² und R³ gleich oder verschiedene Reste sind, die unabhängig voneinander ausgewählt sind aus der Gruppe bestehend aus H, Halogene, substituierte oder unsubstituierte C₁-C₈ Alkyl-, C₂-C₈ Alkenyl-, C₃-C₁₂ Cycloalkyl-, C₇-C₁₃ Aralkyl- und C₆-C₁₄ Arylgruppen und R¹ mit R² oder R³ und R² mit R³ einen Ring ausbilden kann,
b) Lösen einer Metallverbindung der allgemeinen Formeln (II)
M(L¹)_{W}(L²)_{Y}(L³)_{z} (II)
in einem polaren Lösungsmittel, wobei
M für ein Element der 4.-12. Nebengruppe des Periodensystems steht,
L¹ ein Neutralligand ist,
L², L³ ein anionischer Ligand sind, wobei L¹ und/oder L² mit L³ miteinander durch eine oder mehrere kovalente Bindungen verknüpft sein können und
W eine ganze Zahl von 0 bis 3 sein kann,
Y eine ganze Zahl von 0 bis 3 sein kann und
Z eine ganze Zahl von 0 bis 3 sein kann, wobei für den Fall das einer der drei Variablen W, Y oder Z =0 ist, die Summe aus den beiden restlichen Variablen gleich 2, 3 oder 4 ist.
c) Mischen der Lösungen a) und b).

2. Das Verfahren zur Herstellung des Katalysators nach Anspruch 1, wobei
in der Formel (I)
N¹ und Nu² -O sind,
J für ein Element der 1. Hauptgruppe des Periodensystems steht
R ausgewählt ist aus der Gruppe bestehend aus substituierten oder unsubstituierten C₆-C₁₄ Aralkylgruppen
R¹, R², und R³ gleich oder verschiedene Reste sind und unabhängig voneinander ausgewählt sind aus der Gruppe bestehend aus H, substituierten oder unsubstituierten C₁-C₈ Alkylgruppen, C₂-C₈ Alkenylgruppen, C₃-C₁₂ Cycloalkylgruppen, C₇-C₁₃ Aralkylgruppen, C₆-C₁₄ Arylgruppen
und in der Formel (II)
M ausgewählt ist aus der Gruppe bestehend aus Ti, Zr, Hf, Cr, V, Fe, Co, Ni, Ru, Rh, Pd, Os, Ir, Pt, Cu, Ag, Au, Zn, Cd und Hg
L¹ ein organischer oder anorganischer Neutralligand ist, ausgewählt aus der Gruppe bestehend aus Phospanen, der allgemeinen Formel (R¹³)ₓPH_{3-x,} Amine mit der allgemeinen Formel (R¹³)ₓNH_{3-x,} Tetraaralkylethylendiamine, Ether mit der allgemeinen Formel (R¹³)₂O, Alkohole mit der allgemeinen Formel (R¹³)OH, Pyridinderivate mit der allgemeinen Formel C₅H₅₋ₓ(R¹³)ₓN, CO, C₁-C₁₂ Alkylnitril, C₆-C₁₄ Arylnitril und einfach oder mehrfach ethylenisch ungesättigte Doppelbindungssysteme, wobei
R¹³ ausgewählt ist aus der Gruppe bestehend aus H, C₁-C₈ Alkylgruppen, Benzylresten und C₆-C₁₄ Arylgruppen und
x für eine ganze Zahl von 0 bis 3 steht, und
L², L³ ein anionischer Ligand ist, ausgewählt aus der Gruppe bestehend aus Halogenidionen, Amidanionen der Formel R¹⁴R¹⁵N, C₁-C₆-Alkylanionen, Allylanionen, Methallylanionen, Benzylanionen und Arylanionen, wobei
R¹⁴ und R¹⁵ unabhängig voneinander ausgewählt sind aus der Gruppe bestehend aus H, C₁-C₈ Alkylgruppen, Benzylresten und C₆-C₁₄ Arylgruppen und R¹⁴ mit R¹⁵ auch kovalent verknüpft sein kann und
W ein ganze Zahl von 0 bis 3 ist
Y eine ganze Zahl von 0 bis 3 ist und
Z eine ganze Zahl von 0 bis 3 sein kann, wobei für den Fall das einer der drei Variablen W, Y oder Z =0 ist, die Summe aus den beiden restlichen Variablen gleich 2, 3 oder 4 ist.

3. Das Verfahren zur Herstellung des Katalysators nach einem der Ansprüche 1 bis 2, wobei in Formel (I)
Nu¹ und Nu² O sind,
J Lithium, Wasserstoff ist
R Mesityl, 2,4,6-Trimethylphenyl oder 2,6 Diisopropylphenyl ist,
R¹, R², und R³ gleich oder verschiedene Reste sind und unabhängig von einander ausgewählt sind aus der Gruppe bestehend aus H, C₁-C₈ Alkylgruppen und C₆-C₁₄ Arylgruppen und
in Formel (II)
M ausgewählt ist aus der Gruppe bestehend aus Ti, Zr, Cr, V, Fe, Co, Ni, Pd, Cu und Zn
L¹ ein Neutralligand ist, ausgewählt aus der Gruppe bestehend aus Triphenylphosphin, Triethylphosphin, Trimethylphosphin, Trimethylphosphan Dibenzophosphol, Triphenylphosphit, Triethylphosphit, Trimethylphosphit, Triphenylphosphit, Trimethylamin, Triethylamin, Dimethylanilin, Diethylanilin, Benzyldimethylamin, Benzyldiethylamin, Diisopropylamin, Diethylamin, Dimethylamin, Diphenylamin, Phenylendiamine, Tetramethylethylendiamin, Diethylether, Tetrahydrofuran, Wasser, Methanol, Ethanol, Pyridin, 2-Picolin, 3-Picolin, 4-Picolin, 2,3-Lutidin, 2,4-Lutidin, 2,5-Lutidin, 2,6-Lutidin, 3,5 Lutidin, CO, Acrylnitril, Acetonitril, Propionitril, Butyronitril, Benzonitril, Ethenyl, Propenyl, cis-2-Butenyl, trans-2-Butenyl, Cyclohexenyl und Norbornenyl,1,5-Cyclooctadien
L², L³ ein anionischer Ligand ist, ausgewählt aus der Gruppe bestehend aus Chlorid, Bromid, Dimethylamid, Diethylamid, Amid, 2-Carbonsäureestermetallyl, Allyl, Methyl, Ethyl, n-Propyl, i-Propyl, n-Butyl, tert.-Butyl, Hexyl und Phenyl,
W eine ganze Zahl von 0 bis 3
Y eine ganze Zahl von 0 bis 3 und
Z eine ganze Zahl von 0 bis 3 sein kann, wobei für den Fall das einer der drei Variablen W, Y oder Z =0 ist, die Summe aus den beiden restlichen Variablen gleich 2, 3 oder 4 ist.

4. Das Verfahren zur Herstellung des Katalysators nach einem der Ansprüche 1 bis 3, wobei
in der Formel (I)
Nu¹ und Nu² -O sind,
J Wasserstoff, Lithium ist
R Mesityl oder 2,6-Diisopropylphenyl
R¹ tert.-Butyl
R² H
R³ tert.-Butyl
in der Formel (II)
M Ni oder Pd
^{L1} Tetramethylendiamin, Triphenylphosphan, Trimethylphosphan oder 1,5-Cyclooctadien
L², L³ Chlorid, Phenyl oder Methyl und
W 1 oder 2
Y 1 oder 2 und
Z 1 oder 2 ist.

5. Katalysatoren erhältlich durch das Verfahren nach einem der Ansprüche 1 bis 4.

6. Verwendung des Katalysators nach Anspruch 5 als Polymerisationskatalysator.

7. Verfahren zur Herstellung von Olefm-(Co)-Polymeren, wobei der Katalysator nach Anspruch 5 in Gegenwart von olefmischen Monomeren ausgewählt aus der Gruppe bestehend aus 1-Olefinen, Cycloolefinen, funktionalisierten 1-Olefinen und Mischungen derselben umgesetzt wird.

8. Verfahren nach Anspruch 7, wobei Bor- oder Aluminiumverbindungen als Cokatalysatoren zum Reaktionsgemisch hinzugegeben werden.

9. Verfahren nach Anspruch 8, wobei das Molverhältnis von Cokatalysator zu Metall M in der Verbindung der Formel (II) im Bereich von 1:10 bis 1: 10000 liegt.

10. Verfahren nach einem der Ansprüche 7 bis 9, wobei Alumiumoxane als Cokatalysatoren eingesetzt werden.

11. Verfahren nach einem der Ansprüche 7 bis 10, wobei die Polymerisation in polaren Lösungsmitteln oder Lösungsmittelgemischen durchgeführt wird.

12. Reaktionsprodukte erhältlich durch Umsetzung des Katalysators nach einem der Ansprüche 1 bis 4 mit den Cokatalysatoren.

13. Olefin-(Co)-Polymer erhältlich durch das Verfahren nach Anspruch 7.

14. Verwendung des Olefin-(Co)-Polymers zur Herstellung von Formteile aller Art.

15. Formteile erhältlich durch Verarbeitung des Olefin-(Co)-Polymers nach Anspruch 14.
